# EUROPÄISCHE PATENTANMELDUNG

(11) **EP 3 181 465 A1**
(43) Veröffentlichungstag der Anmeldung: **21.06.2017**
(21) Anmeldenummer: 15201023.7
(22) Anmeldetag: 18.12.2015
(51) Int. Cl.: B65B 51/30, B65B 9/12

(54) **VERFAHREN UND VORRICHTUNG ZUR BEFÜLLUNG VON FLEXIBLEN SCHLAUCHBEUTELVERPACKUNGEN**

(71) Anmelder: HILTI Aktiengesellschaft, 9494 Schaan (LI)
(72) Erfinder: Wolf, Matthias, 82205 Gilching (DE); Willner, Ralf, 86874 Tussenhausen (DE)
(74) Vertreter: Hilti Aktiengesellschaft Corporate Intellectual Property

(57) **Zusammenfassung**

Ein Verfahren zur Befüllung von flexiblen Schlauchbeutelverpackungen mit einem, ein grobes, sandartiges Material enthaltenden Füllgut (12) und zum Verschließen der Schlauchbeutelverpackungen umfasst die folgenden Schritte: Einbringen eines oder mehrerer Füllgüter in einen Schlauch (14), Verdrängen des Füllgutes (12) aus einer Verschlusszone des Schlauchs, Abklemmen des Schlauchs (14) in der Verschlusszone, stoffschlüssiges Verbinden der die Abklemmung bildenden Bereiche des Schlauchs (14), zur Bildung geschlossener Enden aufeinanderfolgender Schlauchbeutel, und Abtrennen eines Schlauchbeutels vom Schlauch (14), sodass die beiden durch das Trennen des Schlauchs (14) entstehenden Enden aufeinanderfolgender Schlauchbeutel jeweils stoffschlüssig verschlossen sind. Ferner ist eine Vorrichtung zur Befüllung von flexiblen Schlauchbeutelverpackungen beschrieben.

## Beschreibung

Die vorliegende Erfindung betrifft ein Verfahren zur Befüllung von flexiblen Schlauchbeutelverpackungen mit einem, ein grobes, sandartiges Material enthaltenden Füllgut und zum Verschließen der Schlauchbeutelverpackungen. Zusätzlich betrifft die vorliegende Erfindung eine Vorrichtung zur Befüllung von flexiblen Schlauchbeutelverpackungen mit einem, ein grobes, sandartiges Material enthaltenden Füllgut und zum Verschließen der Schlauchbeutelverpackungen.

Der Einsatz von Schlauchbeutelverpackungen ist im Stand der Technik weit verbreitet. Bei dem zugehörigen Verfahren wird als Erstes ein Folienschlauch hergestellt und anschließend befüllt. Nach dem Befüllen wird durch Abklemmen des Füllgutes im Folienschlauch der Folienbeutel definiert und mittels eines Clips verschlossen. Abschließend werden die entstandenen Beutel zwischen den Clips getrennt. Ein Vorteil der Nutzung von Schlauchbeutelverpackungen ist, dass ein luftfreies Befüllen der Folienbeutel möglich ist. Im Gegensatz dazu ist bei Standbodenbeutelverpackungen nur eine annähernd luftfreie Befüllung möglich.

Grobes, sandartiges Material enthaltende Füllgüter sind z. B. chemisch hochgefüllte Massen oder Flüssigkeiten. Dabei sind die groben, sandartigen Materialien in der Regel die Füllstoffe. Unter chemisch hochgefüllten Massen oder Flüssigkeiten wird hier ein Material mit ein, zwei oder mehreren Komponenten verstanden. Solche Massen oder Flüssigkeiten können beispielsweise Dichtmassen, Mehrkomponentenmörtel, Mehrkomponentenbeschichtungsmassen, Mehrkomponentenfarben, Mehrkomponentenschaumvorprodukte, Mehrkomponentenklebstoffe, Mehrkomponentendichtmassen, Mehrkomponentenschmierstoffe und Mehrkomponentenschleifpasten sein. Die Abmaße der Füllstoffe können dabei teilweise oder ganz der Wandstärke der flexiblen Verpackungen entsprechen.

Beim Abklemmen der Schlauchbeutelverpackung mittels des Clips kann das Problem auftreten, dass große Füllkörper den Klemmprozess behindern und somit negativ mechanisch auf die Verpackungswände einwirken. Darüber hinaus kann es beim Versiegeln der Schlauchbeutelverpackung, was über ein thermisches Schweißverfahren oder ein Reibschweißverfahren realisiert wird, zu Störungen aufgrund der groben Füllstoffe kommen. Dies ist der Fall, wenn sich die groben Füllstoffe an den Siegelstellen befinden. Dadurch werden die Siegelnähte undicht und stellen keine sichere Verbindung dar. Das Resultat ist eine teilweise Zerstörung der Siegelnähte. Das Füllgut hat also großen Einfluss auf die Stabilität der Siegelnähte.

Ein weiteres Problem bei Schlauchbeutelverpackungen aus dem Stand der Technik ist, dass aufgrund von Temperatur-, Druck- und/oder Rheologieschwankungen des zu verfüllenden Füllgutes sowie der Umgebungsbedingungen Folienbeutel mit verschiedenen Längen und Durchmessern entstehen können. Dies hat negative Auswirkungen auf die Gebindegeometrie, insbesondere für die nachfolgenden Montage- und Handhabungsprozesse.

Die Aufgabe der Erfindung ist daher, bei gleichbleibender luftfreier Befüllung eines flexiblen Behälters ein dichtes Verschließen des flexiblen Behälters zu ermöglichen. Dies soll unabhängig von der Größe der Füllkörper geschehen. Zusätzlich soll eine dauerhaft gleiche Beutellänge bei variierenden Temperaturen, Umgebungsbedingungen und Füllguteigenschaften garantiert werden.

Diese Aufgabe wird durch ein gattungsgemäßes Verfahren gelöst, das die folgenden Schritte umfasst:
a) Einbringen eines oder mehrerer Füllgüter in einen Schlauch,
b) Verdrängen des Füllgutes beziehungsweise der Füllgüter aus einer Verschlusszone des Schlauchs,
c) Abklemmen des Schlauchs in der Verschlusszone,
d) stoffschlüssiges Verbinden gegenüberliegender Bereiche des Schlauchs in der Verschlusszone zur Bildung geschlossener Enden aufeinanderfolgender Schlauchbeutel, und
e) Abtrennen eines Schlauchbeutels vom Schlauch, sodass die beiden durch das Trennen des Schlauchs entstehenden Enden aufeinanderfolgender Schlauchbeutel jeweils stoffschlüssig verschlossen sind.

Ein solches erfindungsgemäßes Verfahren ermöglicht es, die Nachteile aus dem Stand der Technik zu vermeiden.

Zunächst werden eines oder mehrere Füllgüter in den Schlauch eingebracht. Damit in der Folge eine möglichst verunreinigungsfreie Klemm- und Verschlusszone gebildet werden kann, wird bzw. werden dann das Füllgut bzw. die Füllgüter aus der Verschlusszone des Schlauchs verdrängt. Daraufhin folgt das Abklemmen des Schlauchs an derjenigen Stelle, an der später ein Schlauchbeutel vom Schlauch abgetrennt werden soll. Aufgrund der vorherigen Verdrängung des Füllgutes bzw. der Füllgüter besteht hier keine Gefahr mehr, dass das Klemmen durch ein Füllgut bzw. mehrere Füllgüter gestört wird. Aufgrund des vorherigen Verdrängens des Füllgutes bzw. mehrerer Füllgüter aus der Verschlusszone ist nun das Erstellen einer kontaminations- und damit fehlerfreien, stoffschlüssigen Verbindung möglich. Damit werden jeweils ein Schlauchbeutelanfang und ein Schlauchbeutelende aneinander angrenzender Schlauchbeutel generiert.

Somit werden die Stabilität und Qualität der Schlauchbeutelverpackung gesteigert. In einer bevorzugten Ausgestaltung des erfindungsgemäßen Verfahrens erfolgt das stoffschlüssige Verbinden durch ein Schweißverfahren, insbesondere ein Ultraschallschweißverfahren. Vorzugsweise erfolgt dabei das stoffschlüssige Verbinden zeitgleich mit der Abklemmung.

Thermische Schweißverfahren und Ultraschallschweißverfahren können ein sicheres, stoffschlüssiges Abschließen der Enden aufeinanderfolgender Schlauchbeutel bewirken. Durch beide Verfahren sind stabile und dichte Versiegelungen der Enden aufeinanderfolgender Schlauchbeutel herstellbar.

Beim Verwenden eines Ultraschallschweißverfahrens wird im Gegensatz zum thermischen Schweißverfahren der Eintrag von Wärme in das Füllgut und die Schlauchbeutelverpackung verringert. Dies kann insbesondere bei gegenüber Wärme empfindlichen Füllgütern vorteilhaft sein.

Das gleichzeitige Abklemmen und stoffschlüssige Verbinden führt zu einer verkürzten Prozesszeit im Vergleich zu einem zeitlichen Hintereinanderschalten dieser beiden Verfahrensschritte. Dadurch können die Effizienz und die Wirtschaftlichkeit des Verfahrens gesteigert werden.

Eine Weiterbildung der Erfindung sieht darüber hinaus vor, dass beim stoffschlüssigen Verbinden mindestens vier, über die gesamte Abklemmung nebeneinander, insbesondere parallel verlaufende, linienförmige Verbindungszonen erstellt werden. Dabei wird jede linienförmige Verbindungszone als zusammenhängende Verbindungszone ausgebildet. Durch mehrere Verbindungszonen wird die Stabilität und Dichtheit einer solchen stoffschlüssigen Verbindung erhöht. Darüber hinaus steigt die Fehlertoleranz einer solchen Verbindung. Durch die mehrfache Ausführung der Verbindungszonen kommt es nämlich beim Versagen in einer Verbindungszone nicht sofort zum Versagen der gesamten Versiegelung eines Endes eines Schlauchbeutels.

Die stoffschlüssigen, linienförmigen Verbindungszonen können in beliebiger Vielzahl erstellt werden. Die Anzahl der parallel verlaufenden Verbindungszonen richtet sich dabei nach der gewünschten Prozesssicherheit. Je unsicherer eine solche Verbindung ist, umso mehr Verbindungszonen können erstellt werden.

Eine parallele Anordnung linienförmiger Verbindungszonen hat zur Folge, dass eine maximale Anzahl an Verbindungszonen auf kleinstem Raum angeordnet werden kann. Somit wird in der Verbindungszone Schlauchbeutelmaterial gespart.

Neben linienförmigen können auch breite, flächenartige Verbindungszonen erstellt werden.

Zusätzlich kann, gemäß einer Ausführungsform der Erfindung, das Trennen des Schlauchs zwischen zwei linienförmigen Verbindungszonen durchgeführt werden, um sicherzustellen, dass beide dabei generierten Schlauchbeutelenden, d.h. ein Schlauchbeutelende und ein Schlauchbeutelanfang, jeweils stoffschlüssig verschlossen sind. Die Trennung der beiden aufeinanderfolgenden Schlauchbeutel muss dabei die Verbindungszonen nicht gleichmäßig auf die beiden aufeinanderfolgenden Schlauchbeutel aufteilen. Es ist z. B. möglich, bei insgesamt vier Verbindungszonen eine Trennung zwischen der ersten und der zweiten Verbindungszone vorzunehmen.

Eine Variante der Erfindung sieht weiter vor, dass die Abklemmung in den Verbindungszonen erfolgt und zwischen den Verbindungszonen Bereiche zur Aufnahme von Körnern des sandartigen Materials geschaffen werden, in die in der Verbindungszone liegende Körner beim Verdrängen hinein verschoben werden. Die maximale Körnergröße ist also abgestimmt auf den Abstand der Verbindungszonen. Die Bereiche zur Aufnahme von Körnern, die sich zwischen den Verbindungszonen befinden, nehmen diejenigen Körner auf, die vor dem Abklemmen in der Verbindungszone waren. Durch das Verschieben der Körner aus den Verbindungszonen heraus entstehen kontaminationsfreie Verbindungszonen, die für ein sicheres, luftdichtes, stoffschlüssiges Verbinden geeignet sind. Damit wird sichergestellt, dass die Verbindungszonen keine Defekte, die aus fehlgeleiteten Körnern des sandartigen Materials resultieren, aufweisen.

Daran anschließend sieht eine Ausgestaltung der Erfindung vor, dass ein drehangetriebenes Zahnrad seitlich eines Schlauchs zum Verdrängen, Abklemmen, stoffschlüssigen Verbinden des Schlauchs und zum Abtrennen eines befüllten, geschlossenen Schlauchbeutels vom Schlauch verwendet wird, wobei an der Außenseite jedes Zahns im Wesentlichen in Richtung der Drehachse verlaufende Fortsätze ausgebildet sind.

Durch dieses drehangetriebene Zahnrad werden unabhängig von den Umgebungsbedingungen und unabhängig von den Eigenschaften des zu verfüllenden Füllgutes Schlauchbeutel von gleicher Läge erstellt. Für das erfindungsgemäße Verfahren wird dabei die Geometrie eines Zahnrades in Verbindung mit einem gleichmäßigen Drehantrieb desselben ausgenutzt. Damit entsteht ein zwangsläufiger Verfahrensablauf mit gleichbleibenden Zeiten im Ablauf der Verfahrensschritte. Als ein weiteres Resultat sind damit auch gleichbleibende Längen der Schlauchbeutel zwangsläufig sichergestellt.

Zusätzlich wird die Aufgabe durch eine Vorrichtung gelöst, umfassend:
a) eine Fülleinrichtung zum Einbringen eines Füllgutes in einen Schlauch,
b) Mittel zum Abklemmen des Schlauchs in einer Verschlusszone,
c) Mittel zum stoffschlüssigen Verbinden gegenüberliegender Bereiche des Schlauchs in der Verschlusszone und
d) eine Schneideinrichtung zum Abtrennen eines befüllten, geschlossenen Schlauchbeutels vom Schlauch im Bereich der Verschlusszone, sodass die beiden durch das Trennen des Schlauchs entstehenden Enden aufeinanderfolgender Schlauchbeutelverpackungen jeweils stoffschlüssig verschlossen sind.

Eine derartige Gestaltung der erfindungsgemäßen Vorrichtung ermöglicht einen prozesssicheren Ablauf der Verfahrensschritte Verdrängen, Abklemmen und stoffschlüssiges Verbinden. Damit wird eine Vorrichtung geschaffen, die die Nachteile aus dem Stand der Technik behebt.

Die Mittel zum Abklemmen, zum stoffschlüssigen Verbinden und die Schneideinrichtung können dabei auf einer pneumatisch oder elektrisch angetriebenen Achse montiert sein. Zum Abklemmen, zum stoffschlüssigen Verbinden und zum Schneiden bzw. Abtrennen werden die Mittel über die pneumatische, hydraulische oder elektrische Achse an den Schlauchbeutel herangefahren. Eine elektronische Steuerung sorgt dabei dafür, dass dieses Heranfahren in regelmäßigen Zeitintervallen erfolgt und somit gleichbleibende Schlauchbeutellängen garantiert werden. Die Zeitintervalle können aus der vorgegebenen Beutellänge und der Füllgeschwindigkeit, hier gemessen in Volumen je Zeiteinheit, berechnet werden.

Eine andere bevorzugte Ausführungsform sieht vor, dass ein erstes, drehangetriebenes Zahnrad seitlich des Schlauchs angeordnet ist und an den radialen Außenseiten der Zähne die Mittel zum Verdrängen, zum Abklemmen und zum stoffschlüssigen Verbinden ausgebildet sind, wobei der Schlauch zwischen der Außenseite eines Zahnes und eines auf der entgegengesetzten Seite des Schlauchs befindlichen Gegenhalters geklemmt wird.

Darüber hinaus ist durch die Anordnung der Mittel zum Verdrängen, zum Abklemmen und zum stoffschlüssigen Verbinden auf dem Zahnrad ein robuster, modularer Aufbau der erfindungsgemäßen Vorrichtung realisiert. Es werden somit z. B. Wartungsarbeiten an der erfindungsgemäßen Vorrichtung erleichtert. Dadurch, dass auf dem Gegenhalter optional keine Mittel zum Verdrängen, zum Abklemmen oder zum stoffschlüssigen Verbinden angeordnet sind, kann dieser als ein konstruktiv einfaches und damit günstiges Bauteil ausgeführt werden.

Darüber hinaus kann der Gegenhalter durch ein zweites, drehbar gelagertes Zahnrad gebildet sein. Die beiden Zahnräder sind synchron in entgegengesetzten Drehrichtungen antreibbar, sodass der Schlauch zwischen den Außenseiten von gegenüberliegenden Zähnen geklemmt wird.

Bei dieser Ausgestaltung der erfindungsgemäßen Vorrichtung sind die Drehbewegungen der Zahnräder so synchronisiert, dass stets die Zahnspitzen gegenüberliegender Zahnräder aufeinandertreffen. Zwischen diesen Zahnspitzen befindet sich der Schlauch beziehungsweise die Schlauchbeutelverpackung. Die geometrischen Eigenschaften der Zahnräder, insbesondere der winklige Versatz zwischen den Mitteln zum Verdrängen, zum Abklemmen und zum stoffschlüssigen Verbinden bestimmt zusammen mit der Vorschubgeschwindigkeit des Schlauchs die Länge einer Schlauchbeutelverpackung. Eine Ausgestaltung des Gegenhalters als zweites, drehbar gelagertes Zahnrad vermeidet darüber hinaus, dass der Schlauch bzw. die Schlauchbeutelverpackung in gleitendem Kontakt mit dem Gegenhalter kommt und so aufgrund dieser mechanischen Belastung Schaden nimmt. Die beiden erfindungsgemäßen Zahnräder können gegebenenfalls den Schlauch der Schlauchbeutelverpackungen durch die erfindungsgemäße Vorrichtung hindurchfördern.

Auf den Außenseiten können im Wesentlichen parallel zur Drehachse verlaufende linienförmige, radiale Fortsätze ausgebildet sein, die die Mittel zum Abklemmen des Schlauches bilden. Die Realisierung von linienförmigen radialen Fortsätzen auf den Außenseiten von gegenüberliegenden Zähnen ist konstruktiv einfach und robust zugleich. Nachdem der Abstand zwischen gegenüberliegenden Zahnrädern einmal eingestellt wurde, ist mit den linienförmigen, radialen Fortsätzen ein wiederholgenaues Abklemmen des Schlauches ohne Weiteres möglich.

Die erfindungsgemäße Vorrichtung kann wenigstens vier nebeneinander verlaufende radiale Fortsätze auf einer Außenseite haben, wobei der Abstand der Fortsätze wenigstens 1 mm, vorzugsweise wenigstens 2 mm beträgt.

In einer vorteilhaften Variante der Erfindung besitzen die Fortsätze in Radialschnittansicht durch das Zahnrad spitz zulaufende oder abgerundete Profile. Durch diese geometrische Gestaltung ist es zunächst möglich, Körner des zu verpackenden Füllgutes aus den Verbindungszonen zu verdrängen. Je nach Korngröße, -material und -geometrie können dafür spitz zulaufende oder abgerundete Profile besser geeignet sein. Eine Kombination ist ebenfalls denkbar. Darüber hinaus wird durch diese geometrische Gestaltung der Schlauchbeutel an den Verbindungszonen so zusammengedrückt, dass eine stoffschlüssige Verbindung fehlerfrei erstellt werden kann.

Eine weitere Ausführungsform der Erfindung besteht darin, dass in den Zähnen die Schneideinrichtung, insbesondere in Form eines radial ausfahrbaren Messers, integriert ist. Diese Gestaltung ermöglicht es, zwischen den Verbindungszonen die befüllten Schlauchbeutelenden voneinander zu trennen. Die Integration der Schneideinrichtung in den Zähnen der Zahnräder ermöglicht darüber hinaus einen kompakten Aufbau der erfindungsgemäßen Vorrichtung. Wird die Schneideinrichtung als radial ausfahrbares Messer gestaltet, kann dieses Messer nur in den Momenten ausgefahren werden, in denen es benötigt wird. Somit ist eine Verletzungsgefahr für einen Maschinenbediener stark reduziert.

Eine Weiterbildung der Erfindung sieht zusätzlich vor, dass das Mittel zum stoffschlüssigen Verbinden durch das Zahnrad und den Gegenhalter gebildet ist, insbesondere wobei das erste Zahnrad als Sonotrode oder Schweißbacke und der Gegenhalter als Amboss beziehungsweise Schweißbacke ausgebildet sind.

Die erfindungsgemäße Vorrichtung sieht weiterhin vor, dass die Fortsätze die Schweißkontakte bilden, wodurch ein kompakter Aufbau der erfindungsgemäßen Vorrichtung erreicht wird. Ein zusätzliches, die Schweißkontakte bildendes Element ist demnach nicht notwendig.

Die Erfindung wird nachstehend anhand der beigefügten Zeichnungen näher erläutert. Es zeigen:
- Fig. 1: die erfindungsgemäße Vorrichtung zur Durchführung des erfindungsgemäßen Verfahrens in einer schematischen Seitenansicht;
- Fig. 2: einen vergrößerten Ausschnitt der Vorrichtung nach Fig. 1;
- Fig. 3: ein Detail der Vorrichtung aus Fig. 1 gemäß einer Alternative; und
- Fig. 4: zwei durch die erfindungsgemäße Vorrichtung unter Anwendung des erfindungsgemäßen Verfahrens gefertigte Schlauchbeutelverpackungen.

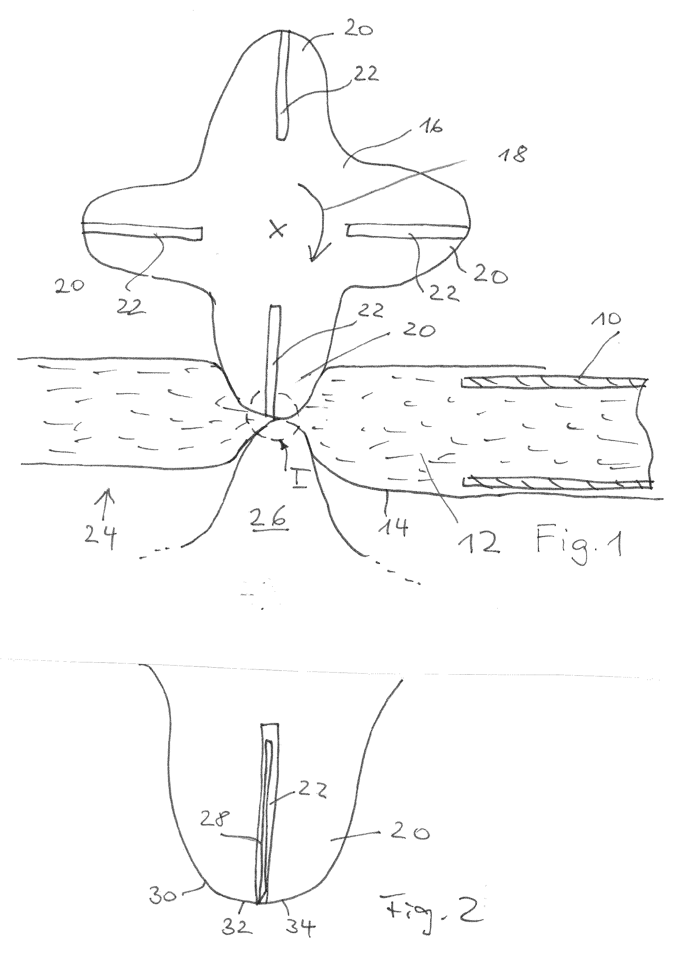

Fig.1 zeigt beispielhaft eine Vorrichtung zum Befüllen und Schließen von Schlauchbeutelverpackungen.

Über eine rohrförmige Fülleinrichtung wird ein grobes, sandartiges Material enthaltendes Füllgut 12 in einen flexiblen, folienartigen Schlauch 14 eingebracht, der eine Schlauchbeutelverpackung für das Füllgut darstellt.

Als Füllgut 12 sind allgemein jegliche Art von Füllgütern, insbesondere ein- oder mehrkomponentige Stoffe zu verstehen, insbesondere für die Bauindustrie.

Der Schlauch 14 bewegt sich in Fig. 1 von rechts nach links und wird an seinen Enden jeweils durch eine Vorrichtung geschlossen, die ein sich in Pfeilrichtung drehendes Zahnrad 16 aufweist. An den, im vorliegenden Fall abgerundeten Zähnen 20 des Zahnrads 16 sind Mittel zum Abklemmen des Schlauchs 14, in denen der Schlauch 14 am vorderen und hinteren Ende abgeklemmt wird, Mittel zum stoffschlüssigen Verbinden gegenüberliegender und aneinanderliegender Abschnitte des Schlauchs 14 und schließlich Schneideinrichtungen 22 zum Abtrennen des befüllten, dann geschlossenen Schlauchbeutels 24 vorgesehen. Im Folgenden wird noch genauer auf die jeweiligen Details eingegangen.

Mit dem Zahnrad 16 wirkt ein sogenannter Gegenhalter 26 zusammen, der stationär ausgeführt sein kann und als abgerundeter, quer zur Transportrichtung des Schlauchs 14 und in Axialrichtung des Zahnrads 16 verlaufender Steg ausgeführt sein kann. Alternativ hierzu ist es möglich, den Gegenhalter 26 ebenfalls als sich drehendes Zahnrad auszuführen.

Ist der Gegenhalter 26 ein sich nicht drehendes Teil, kann er vorzugsweise zu und weg von der Achse des Zahnrads bewegt werden, gemäß Fig. 1 vertikal bewegt werden, wenn der Schlauch 14 weiter getaktet werden muss.

In Fig. 1 ist zu sehen, dass links vom Zahnrad 16 der bereits befüllte Schlauchbeutel 24 durch den am Gegenhalter 26 anliegenden Zahn abgeklemmt wird. Dadurch wird gleichzeitig die zu befüllende Schlauchbeutelverpackung rechts vom Zahnrad 16 geschlossen.

Fig. 2 zeigt einen der Zähne 20 im Detail. In jedem Zahn 20 sitzt eine Schneideinrichtung 22 in Form eines radial verschiebbaren Messers 28, welches in einer entsprechenden Nut im Zahn untergebracht ist und welches durch eine elektromechanische, hydraulische oder pneumatische Antriebseinheit radial auswärts und einwärts bewegt werden kann.

Jeder abgerundete Zahn 20 hat im Bereich seiner Zahnspitze mehrere Abschnitte. Seitlich neben dem Austrittsschlitz für das Messer 28 liegen Abschnitte 32, 34, die die am weitesten radial nach außen weisenden Abschnitte jedes Zahns 20 bilden und die den Schlauch 14 zwischen sich und dem Gegenhalter 26 abklemmen. Damit bilden diese Abschnitte 32, 34 Mittel zum Abklemmen des Schlauchs.

Der Bereich des Schlauchs 14, in dem abgeklemmt wird, bildet eine sogenannte Verschlusszone.

Angrenzend an den Abschnitt 32 liegt ein Bereich 30, welcher nicht unmittelbar zum Abklemmen des Schlauchs 14 dient. Beim Drehen des Zahnrads 16 drängt das Zahnrad 16 im Bereich 30 jedoch die sich in der Verschlusszone befindlichen Körner des Materials im Füllgut 12 aus den späteren Verbindungszonen, sodass in den Verbindungszonen keine Körner liegen. Die Verbindungszonen sind diejenigen gegenüberliegenden Bereiche der Schlauchbeutelverpackung, die miteinander stoffschlüssig verbunden sind. Der Bereich 30 des Zahns 20 bildet dadurch ein Mittel zum Verdrängen der Füllgüter aus den Verschlusszonen des Schlauchs 14.

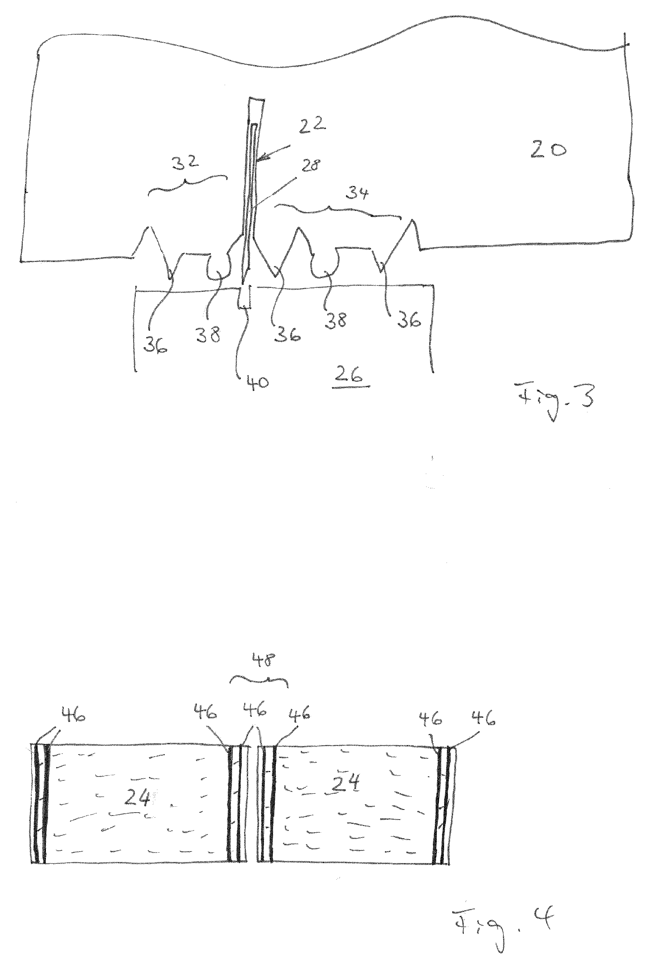

In Fig. 3 ist der mit I in Fig. 1 gezeigte Bereich des Zahnrads 16 und des Gegenhalters 26 weiter vergrößert und in einer alternativen Variante dargestellt.

In den Abschnitten 32 und 34 gibt es mehrere in Axialrichtung des Zahnrads 16 verlaufende stegartige Fortsätze, von denen die Fortsätze 36 spitz zulaufen und die Fortsätze 38 abgerundet sind. Diese Fortsätze 36, 38 enden zum Gegenhalter 26 hin nicht in einer ebenen Fläche, sondern führen zu einer Art Linienberührung mit dem Gegenhalter 26. Beim Aufeinanderzubewegen von Zahnrad 16 und Gegenhalter 26 werden Körner, die sich in der Verschlusszone befinden, nicht gequetscht, sondern seitlich verdrängt, entweder in die Zwischenräume zwischen den Fortsätzen 36, 38 oder in die Beutel hinein. Somit ist es ausgeschlossen, dass Körner zwischen dem Gegenhalter 26 und den radialen Enden der Fortsätze 36, 38 zu liegen kommen. Damit ist ein Kontakt gegenüberliegender Bereiche der Folie zwischen den Fortsätzen 36, 38 und dem Gegenhalter 26 garantiert, sodass hier die Verbindungszonen entstehen.

Der in Transportrichtung der Folie zu messende Abstand zwischen den benachbarten Fortsätzen 36, 38 beträgt wenigstens 1 mm, vorzugsweise wenigstens 2 mm, sodass genügend Platz zur Aufnahme der Körner im Füllgut vorhanden ist.

Diese Variante benötigt nicht zwingend noch einen separaten Bereich 30 zum Verdrängen des Füllgutes aus den Verbindungszonen. Das entsprechende Mittel zum Verdrängen kann durch die besonderen Geometrien der Fortsätze 36, 38 auch gebildet werden.

In Figur 3 ist zudem eine Vertiefung 40 gezeigt, in die das Messer 28 eintauchen kann, um die Folie zu durchtrennen.

Das Zahnrad 16, genauer gesagt die Fortsätze 36, 38, kann als Schweißbacke oder Ultraschallsonotrode wirken, sodass es eine Mehrfachfunktion innehat.

Die Funktionsweise der Vorrichtung wird nachfolgend erläutert. In der in Figur 1 dargestellten Ausführungsform wurde gerade das Zahnrad 16 in die in Figur 1 dargestellte Stellung gedreht, sodass die Fortsätze 36, 38 oder, mit Bezug auf die vereinfachte Ausführungsform nach Figur 2, die Abschnitte 32, 34 gegenüberliegende Bereiche des Mantels gegeneinanderdrücken, und zwar zwischen sich und dem Gegenhalter 26.

Beispielsweise kann der Gegenhalter 26 vertikal verstellbar sein oder stationär angeordnet sein, sodass der Schlauch 14 beim Bewegen des Zahnrads 16 entlang des Gegenhalters 26 gezogen wird. Wenn dann jedoch der Bereich 30 oder die Fortsätze 36, 38 zum Gegenhalter 26 bewegt werden, werden die sich in diesem Bereich befindenden Körner im Schlauch 14 seitlich verdrängt, und zwar in benachbarte Bereiche, beispielsweise zwischen den Fortsätzen 36, 38. Anschließend kommt es dann zum Verschließen des Schlauchs, wenn die Abschnitte 32, 34 oder die Fortsätze 36, 38 in ihrer endgültigen Position sind, in der sie zwischen sich und dem Gegenhalter 26 den Schlauch 14 abtrennen.

Anschließend wird die Schweißbacke oder die Ultraschallsonotrode aktiviert, sodass die aufeinanderliegenden Bereiche des Schlauchs 14 miteinander verschweißt werden. Es ergeben sich, wie in Figur 4 gezeigt, mehrere parallele linienförmige Verbindungszonen 46, die zusammen die Verschlusszone 48 definieren. Aufeinanderfolgende Schlauchbeutel 24 sind somit an ihren zugewandten Enden gleichzeitig verschlossen.

Anschließend wird das Messer 28 ausgefahren und trennt die beiden Schlauchbeutel 24 voneinander.

Vorzugsweise sind, wie in Figur 4 gezeigt, mehrere Verbindungszonen seitlich der Schnittlinie vorgesehen, die im dargestellten Ausführungsbeispiel durch die Fortsätze 36, 38 auf jeder Seite gebildet werden. Damit ist eine zusätzliche Verschlusssicherheit gewährleistet.

In der in Fig. 3 dargestellten Ausführungsform sind rechts vom Messer 28 drei Verbindungszonen 46 durch die Fortsätze 36, 38 gebildet, wogegen links vom Messer 28 zwei Fortsätze 36, 38 und zwei Verbindungszonen 46 vorhanden sind.

## Patentansprüche

1. Verfahren zur Befüllung von flexiblen Schlauchbeutelverpackungen mit einem, ein grobes, sandartiges Material enthaltenden Füllgut (12) und zum Verschließen der Schlauchbeutelverpackungen, umfassend die folgenden Schritte:
(a) Einbringen eines Füllgutes (12) in einen Schlauch (14),
(b) Verdrängen des Füllgutes (12) aus einer Verschlusszone (48) des Schlauchs (14),
(c) Abklemmen des Schlauchs (14) in der Verschlusszone (48),
(d) stoffschlüssiges Verbinden gegenüberliegender Bereiche des Schlauchs (14) in der Verschlusszone (48) zur Bildung geschlossener Enden aufeinanderfolgender Schlauchbeutel, und
(e) Abtrennen eines Schlauchbeutels (24) vom Schlauch (14), sodass die beiden durch das Trennen des Schlauchs (14) entstehenden Enden aufeinanderfolgender Schlauchbeutel (24) jeweils stoffschlüssig verschlossen sind.

2. Verfahren gemäß Anspruch 1, **dadurch gekennzeichnet, dass** das stoffschlüssige Verbinden durch ein Schweißverfahren, insbesondere ein Ultraschall-Schweißverfahren, erfolgt, insbesondere zeitgleich mit der Abklemmung erfolgt.

3. Verfahren gemäß einem der vorhergehenden Ansprüche, **dadurch gekennzeichnet, dass** beim stoffschlüssigen Verbinden mindestens vier, über die gesamte Verschlusszone (48) nebeneinander, insbesondere parallel verlaufende, linienförmige Verbindungszonen (46) erstellt werden.

4. Verfahren nach Anspruch 3, **dadurch gekennzeichnet, dass** die linienförmigen Verbindungszonen (46) jeweils als zusammenhängende Verbindungszone ausgebildet werden.

5. Verfahren gemäß Anspruch 3 oder 4, **dadurch gekennzeichnet, dass** das Trennen des Schlauchs (14) zwischen zwei linienförmigen Verbindungszonen (46) durchgeführt wird.

6. Verfahren gemäß einem der vorhergehenden Ansprüche, **dadurch gekennzeichnet, dass** die Abklemmung in den Verbindungszonen (46) erfolgt und zwischen den Verbindungszonen (46) Bereiche zur Aufnahme von Körnern des sandartigen Materials geschaffen werden, in die in der Verbindungszone (46) liegende Körner beim Verdrängen hinein verschoben werden.

7. Verfahren nach einem der vorhergehenden Ansprüche, **dadurch gekennzeichnet, dass** ein drehangetriebenes Zahnrad (16) seitlich eines Schlauchs (14) zum Verdrängen, Abklemmen, stoffschlüssigen Verbinden der Bereiche des Schlauchs (14) und zum Abtrennen eines befüllten, geschlossenen Schlauchbeutels (24) vom Schlauch (14) verwendet wird, wobei an der Außenseite der Zähne (20) im Wesentlichen in Richtung der Drehachse verlaufende Fortsätze (36, 38) ausgebildet sind.

8. Vorrichtung zur Befüllung von flexiblen Schlauchbeutelverpackungen mit einem, ein grobes, sandartiges Material enthaltenden Füllgut (12) und zum Verschließen der Schlauchbeutelverpackungen, umfassend:
(a) eine Fülleinrichtung zum Einbringen eines Füllgutes (12) in einen Schlauch (14),
(b) Mittel zum Abklemmen des Schlauchs (14) in einer Verschlusszone (48),
(c) Mittel zum stoffschlüssigen Verbinden gegenüberliegender Bereiche des Schlauchs (14) in der Verschlusszone (48) und
(d) eine Schneideinrichtung (22) zum Abtrennen eines befüllten, geschlossenen Schlauchbeutels (24) vom Schlauch (14) im Bereich der Verschlusszone (48), sodass die beiden durch das Trennen des Schlauchs (14) entstehenden Enden aufeinanderfolgender Schlauchbeutelverpackungen jeweils stoffschlüssig verschlossen sind.

9. Vorrichtung nach Anspruch 8, **dadurch gekennzeichnet, dass** ein erstes, drehangetriebenes Zahnrad (16) seitlich des Schlauchs (14) angeordnet ist und an den radialen Außenseiten der Zähne (20) die Mittel zum Verdrängen, zum Abklemmen und zum stoffschlüssigen Verbinden ausgebildet sind, wobei der Schlauch (14) zwischen der Außenseite eines Zahnes (20) und eines auf der entgegengesetzten Seite des Schlauchs (14) befindlichen Gegenhalters (26) geklemmt werden kann.

10. Vorrichtung nach Anspruch 9, **dadurch gekennzeichnet, dass** der Gegenhalter (26) durch ein zweites, drehbar gelagertes Zahnrad gebildet ist und die beiden Zahnräder synchron in entgegengesetzte Drehrichtungen antreibbar sind, sodass der Schlauch (14) zwischen den Außenseiten von gegenüberliegenden Zähnen (20) geklemmt wird.

11. Vorrichtung nach Anspruch 9 oder 10, **dadurch gekennzeichnet, dass** auf den Außenseiten im Wesentlichen parallel zur Drehachse verlaufende, linienförmige, radiale Fortsätze (36, 38) ausgebildet sind, die die Mittel zum Abklemmen des Schlauchs (14) bilden.

12. Vorrichtung nach Anspruch 11, **dadurch gekennzeichnet, dass** wenigstens vier nebeneinander verlaufende radiale Fortsätze (36, 38) auf einer Außenseite zum Abklemmen während eines Abklemmvorgangs vorhanden sind, wobei der Abstand der Fortsätze (36, 38) wenigstens 1 mm, vorzugsweise wenigstens 2 mm beträgt.

13. Vorrichtung nach Anspruch 11 oder 12, **dadurch gekennzeichnet, dass** die Fortsätze (36, 38) in Radialschnittansicht durch das Zahnrad (16) spitz zulaufende oder abgerundete Profile besitzen.

14. Vorrichtung nach einem der Ansprüche 9 bis 13, **dadurch gekennzeichnet, dass** in den Zähnen (20) die Schneideinrichtung (22), insbesondere in Form zumindest eines radial ausfahrbaren Messers (28), integriert ist.

15. Vorrichtung nach einem der Ansprüche 9 bis 14, **dadurch gekennzeichnet, dass** das Mittel zum stoffschlüssigen Verbinden durch das Zahnrad (16) und den Gegenhalter (26) gebildet ist, insbesondere wobei das erste Zahnrad (16) als Sonotrode oder Schweißbacke und der Gegenhalter als Amboss bzw. Schweißbacke ausgebildet sind.

16. Vorrichtung nach einem der Ansprüche 11 bis 13 und zusätzlich nach Anspruch 15, **dadurch gekennzeichnet, dass** die Fortsätze (36, 38) die Schweißkontakte bilden.
